(19)

Europäisches
Patentamt

European
Patent Office

Office européen
des brevets

(11)  **EP 4 193 844 A1**

(12)  **EUROPEAN PATENT APPLICATION**

(43) Date of publication:
**14.06.2023  Bulletin 2023/24**

(21) Application number: **21214165.9**

(22) Date of filing: **13.12.2021**

(51) International Patent Classification (IPC):
**A23J 3/26** *(2006.01)*      **A23L 11/00** *(2021.01)*
**A23J 3/22** *(2006.01)*

(52) Cooperative Patent Classification (CPC):
**A23J 3/227; A23J 3/26; A23L 29/212**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Wageningen Universiteit**
  **6708 PB Wageningen (NL)**
• **Stichting Wageningen Research**
  **6708 PB  Wageningen (NL)**
• **Ingredion Germany GmbH**
  **20097 Hamburg (DE)**

(72) Inventors:
• **BÜHLER, Jan Michael**
  **6706 JE Wageningen (NL)**
• **VAN DER GOOT, Atze Jan**
  **6717 TR Ede (NL)**
• **BRUINS, Marieke Elisabeth**
  **6708 ML Wageningen (NL)**
• **HUA, Kieu Nam Phuong**
  **3951 CE Maarn (NL)**
• **HENDRIKX, Petrus Johannes Hubertus Maria**
  **21436 Marschacht (DE)**
• **PIERUSCHEK, Kathrin Patrizia**
  **22303 Hamburg (DE)**

(74) Representative: **V.O.**
  **P.O. Box 87930**
  **2508 DH Den Haag (NL)**

(54)  **STARCH ADDITION FOR IMPROVED STRUCTURE FORMATION IN MEAT ANALOGUES**

(57)    The invention relates to a composition comprising at least one plant-based protein and at least one starch. The invention further relates to a process of texturizing a composition of the invention, to a fibrous structure that is generated by such process, and to an edible product comprising said fibrous structure.

EP 4 193 844 A1

**Description**

FIELD

The invention relates to compositions and methods for texturizing plant-based protein material. The invention further relates to fibrous structures thus obtained, and their application in edible products such as meat analogues.

1 INTRODUCTION

The high meat consumption has detrimental consequences for planet earth. A route to reduce meat consumption is based on meat analogues comprising, for example, plant proteins. To make these analogues more attractive, the sensory appeal should be improved and the price should decrease since these factors have a large, and often determining influence on the food choice of consumers (Markovina et al., 2015. Food Qual Prefer 45: 26-32). An attractive meat analogue should mimic the entire eating experience of real meat in terms of taste, texture, smell and appearance.

The fibrous structure of real meat has been identified by the scientific community as one of the key properties to focus on in the development of viable plant-based meat alternatives (Hoek et al., 2011. Appetite 56: 662-673), which has therefore been at the heart of many studies. Extrusion, especially high moisture extrusion (HME), has been used for this purpose since the 90's (Cheftel et al., 1992. Food Res Int 8: 235-275) and is currently one of the main processes to produce meat analogues commercially. Research in the past decade revealed that another thermomechanical process has strong potential as well, called shear cell technology, specifically High Temperature Shear Cell (HTSC) (Grabowska et al., 2014. Food Res Int 64: 743-751).

At present, most meat analogues are based on soy protein due to its specific properties and low prices. The development of new ingredients that are suitable for the formation of fibrous structures is essential for innovations in plant-based meat analogues. So far, fibrousness could be achieved by using (combinations of) plant-based proteins such as gluten, soy, pea, rapeseed, sunflower and faba bean and/or milk proteins such as calcium caseinates, combined with water, but the exact mechanisms of how the fibrous structures are created is not understood.

There is need for meat analogues that resemble the overall eating experience and mouthfeel of real meat. Therefore, there is need for improvement of the existing plant-based meat analogue recipes in terms of texture. There furthermore is need for new fibrous plant-based meat analogue recipes.

2 BRIEF DESCRIPTION OF THE INVENTION

It was found that the specific starch types may improve plant-based meat analogues, especially concerning fibrousness. Meat analogues produced by the addition of starch had a better resemblance of mouthfeel (i.e. initial deformation) to meat. The addition of starch to a composition with a structuring potential did not result in a loss of fibrousness. Starch addition was also found to induce fibrous structure formation in compositions that did not form fibers without starch. Furthermore, starch addition was shown to enable the use of lower processing temperatures and higher moisture addition.

Therefore, the invention provides a composition comprising at least one plant-based protein and at least one starch, wherein the protein content of the composition is at least 25 wt% based on the total dry weight of the composition, wherein the at least one starch is present at 3-40 wt% based on the total dry weight of the composition if the at least one starch is a native starch with an amylose content between 10 and 40%, wherein the at least one starch is present at 3-30 wt% based on the total dry weight of the composition if the at least one starch is a native starch with an amylose content between 40 and 80% and wherein the at least one starch is present at 3-70 wt% based on the total dry weight of the composition if the at least one starch is a pre-functionalized starch with an amylose content between 10 and 80%.

Said at least one starch in a composition according to the invention preferably is from a different botanical source than the at least one plant-based protein. Said at least one starch preferably is capable of gelatinizing within 15 minutes with the application of shear and moisture at a temperature of at least 80°C, preferably at least 100 °C, more preferably at least 120°C. Said at least one starch preferably is a pre-functionalized starch which is heat-treated, preferably pre-gelatinised. Said at least one starch preferably is a maize starch, pea starch, or combination thereof.

Said at least one plant-based protein in a composition according to the invention preferably is obtained from a seed, a grain, a pulse, or a combination thereof. Said at least one plant-based protein preferably is a wheat protein, pulse protein, or combination thereof, wherein the pulse protein preferably is selected from the group consisting of faba bean, soybean, pea, or combination thereof.

Preferably, the composition according to the invention is a powder, a slurry or a dough.

The composition according to the invention may further comprise 0.5 - 4 wt %, preferably about 1 wt %, based on total weight of the composition of a salt, preferably selected from sodium chloride (NaCl) and/or potassium chloride (KCl).

The composition according to the invention may further comprise 55-75 wt% of water, based on total weight of the composition.

The invention further provides a process, comprising the steps of providing a composition according to the invention and texturizing by shear force the composition at a temperature between 80 °C and 160 °C, preferably between 120 °C and 140 °C.

Said texturizing preferably is performed by extrusion, including high moisture extrusion, or shear cell technology.

A preferred composition for use in a process according to the invention comprises at least one starch that is pre-functionalized, preferably pre-heated, more preferably pre-gelatinised.

The invention further provides a fibrous structure that is generated by process according to the invention, having anisotropy in parallel and perpendicular direction. Said fibrous structure preferably has an anisotropy ratio of greater than 1.5.

The invention further provides an edible product comprising the fibrous structure according to the invention. Preferably, said edible product is a food or feed product, or an ingredient for a food or feed product. Preferably, said edible product is a meat of fish analogue.

The invention further provides the use of a fibrous structure according to the invention in the manufacture of an edible product such as a meat analogue.

The invention further comprises the use of a starch as described by the invention in a fibrous structure or edible product according to the invention. Preferably, said starch replaces at least a portion of the gluten comprised in a fibrous plant-based structure or edible product.

BRIEF DESCRIPTION OF THE FIGURES

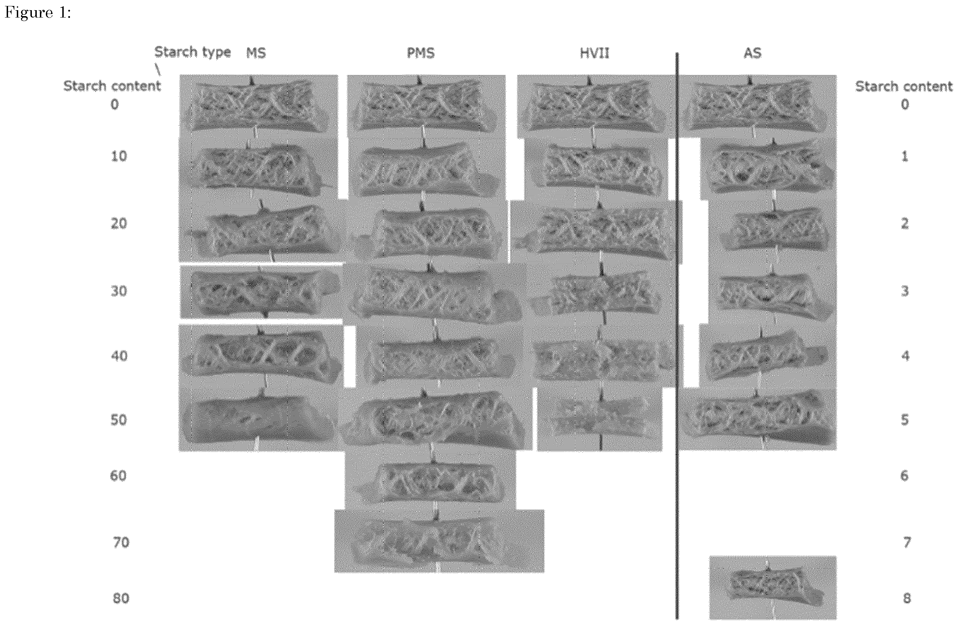

Figure 1. Photographs of macro-structures after shearing maize starch (MS), gelatinized MS (PMS), Hylon® VII unmodified food starch (HVII) or Amioca™ starch (AS) in combination with wheat gluten (WG) in a High Temperature Shear Cell (HTSC). Numbers in the left column indicate the amount of added starch. Numbers in the right column indicate the amount of added AS. The numbers indicating the starch content are expressed by the weight percentage based on the dry weight of the composition. The numbers of added AS were 10-fold smaller, ranging from 1-8%. All samples had a dry matter content of 40% (based on the total wet composition). Each sample had a width of approximately 5 cm.

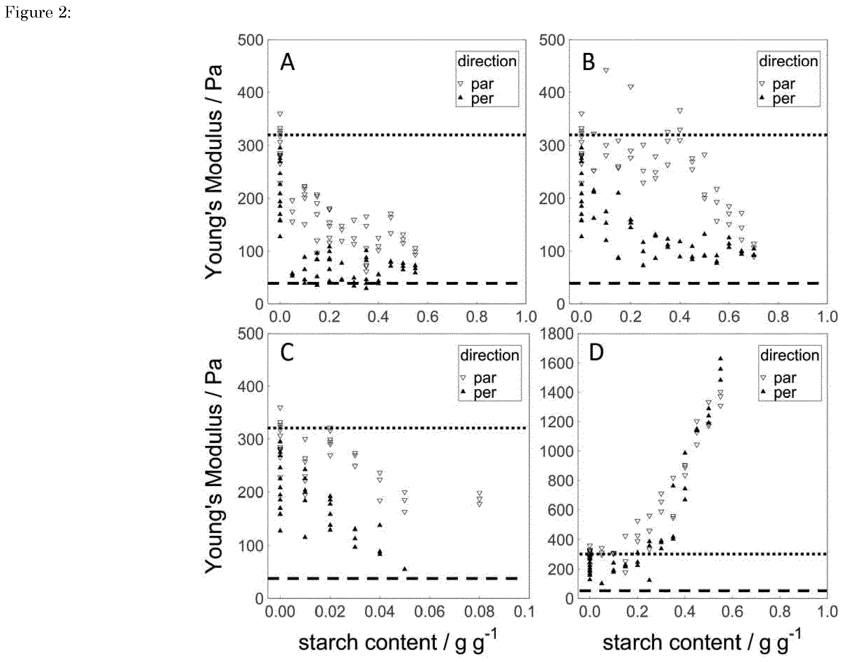

Figure 2. Young's modulus in parallel and perpendicular direction (Pa) over the added amount (based on the dry composition) of (A) maize starch (MS), (B) pre-gelatinized MS (PMS), (C) Amioca™ starch (AS) or (D) Hylon® VII unmodified food starch (HVII). The horizontal dotted (parallel) and dashed (perpendicular) lines represent the values for cooked chicken meat, obtained by Schreuders et al. (2019. J Food Eng 261: 32-39). Note that the x-axis for AS and the y-axis of HVII have a different ranges than the others. Abbreviations, par: parallel, per: perpendicular.

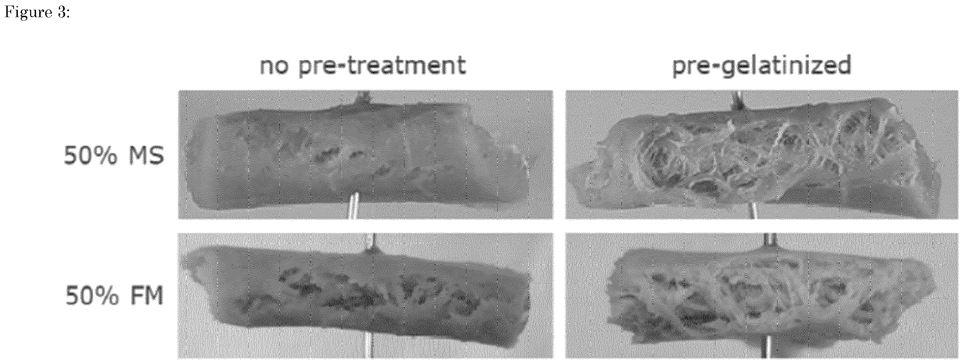

Figure 3. Photographs of macrostructures after shearing wheat gluten with untreated maize starch (MS) and faba bean meal (FM) as well as gelatinized MS (PMS) and pre-heated FM (PFM) in a High Temperature Shear Cell (HTSC). All samples had a dry matter content of 40% (based on the total wet composition), with a gluten content of 50% (based on the dry composition). Each sample has a width of approximately 5 cm.

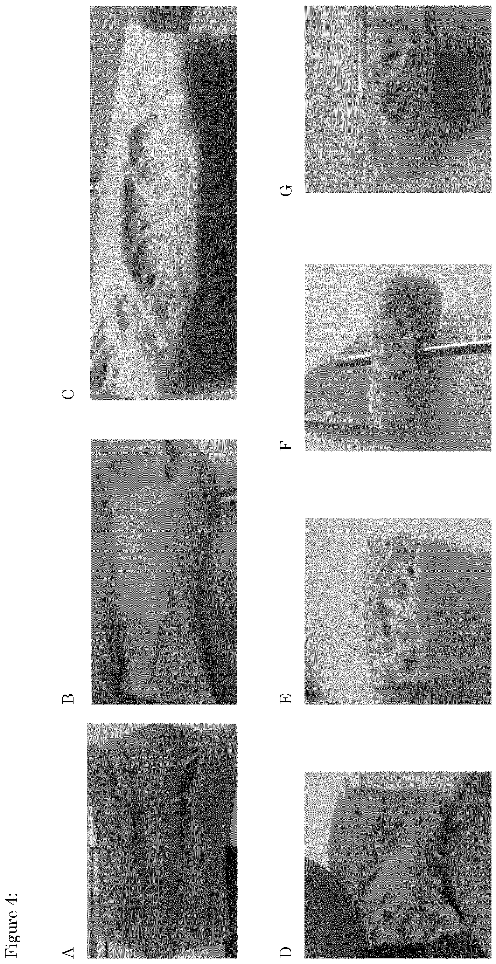

Figure 4. Photographs of macrostructures after shearing wheat gluten (WG) with different added starches and processed at different temperatures. The obtained macrostructure of reference samples is shown (A-C): (A) a reference sample comprising 40 wt % of WG, without NaCl was sheared for 15 min and 30 rpm (shear rate of 39 $s^{-1}$) at 120 °C; (B) a reference sample comprising 40 wt % of WG, 1 wt % NaCl was sheared for 15 min and 30 rpm (shear rate of 39 $s^{-1}$) at 120 °C; and (C) a reference sample comprising 40 wt % of WG, 1 wt % NaCl was sheared for 15 min and 30 rpm (shear rate of 39 $s^{-1}$) at 140 °C. Furthermore, macrostructures of different samples comprising WG and a starch is shown: (D) a sample comprising 10 wt % of National™ B37 food starch and 30 wt % of WG, sheared for 15 min and 30 rpm (shear rate of 39 $s^{-1}$) at 120 °C; (E) a samples comprising 8 wt % of Hylon® VII unmodified food starch, 32 wt % of WG, and 1% of NaCl, sheared for 15 min and 30 rpm (shear rate of 39 $s^{-1}$) at 120 °C; (F) a sample comprising 8 wt % of maize starch, 32 wt % of WG, and 1% of NaCl, sheared for 15 min and 30 rpm (shear rate of 39 $s^{-1}$) at 120 °C; and (G) a sample comprising 10 wt % of Purity P® 1002 pea starch and 30 wt % of WG, sheared for 15 min and 30 rpm (shear rate of 39 $s^{-1}$) at 120 °C

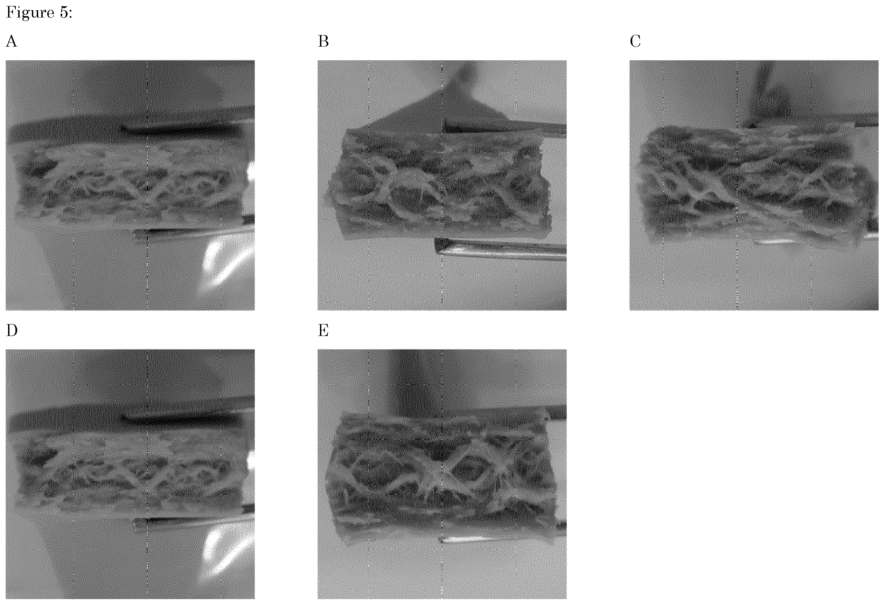

Figure 5. Photographs of macrostructures after shearing a composition comprising wheat gluten (WG), Pea protein isolate (PPI) and different starches. (A) The obtained macrostructure of a reference sample comprising 17.5% of WG, 17.5 wt % of PPI and 0.5 wt % of NaCl, that was sheared for 15 min and 30 rpm (shear rate of 39 $s^{-1}$) at 120 °C is shown. Furthermore, the macrostructures of different samples comprising WG, PPI and a starch are shown: (B) a sample comprising 5.5 wt % of National™ B37 food starch, 12 wt % of WG, 17.5 wt % of PPI and 0.5 wt % of NaCl, sheared for 15 min and 30 rpm (shear rate of 39 $s^{-1}$) at 120 °C; (C) a sample comprising 5.5 wt % of Hylon®

VII unmodified food starch, 12 wt % of WG, 17.5wt % of PPI and 0.5 wt % of NaCl, sheared for 15 min and 30 rpm (shear rate of 39 s$^{-1}$) at 120 °C; (D) a sample comprising 5.5 wt % of maize starch, 12 wt % of WG, 17.5 wt % of PPI and 0.5 wt % of NaCl, sheared for 15 min and 30 rpm (shear rate of 39 s$^{-1}$) at 120 °C; and (E) a samples comprising 5.5 wt % of Purity P® 1002 pea starch, 12 wt % of WG, 17.5 wt % of PPI and 0.5 wt % of NaCl, sheared for 15 min and 30 rpm (shear rate of 39 s$^{-1}$) at 120 °C.

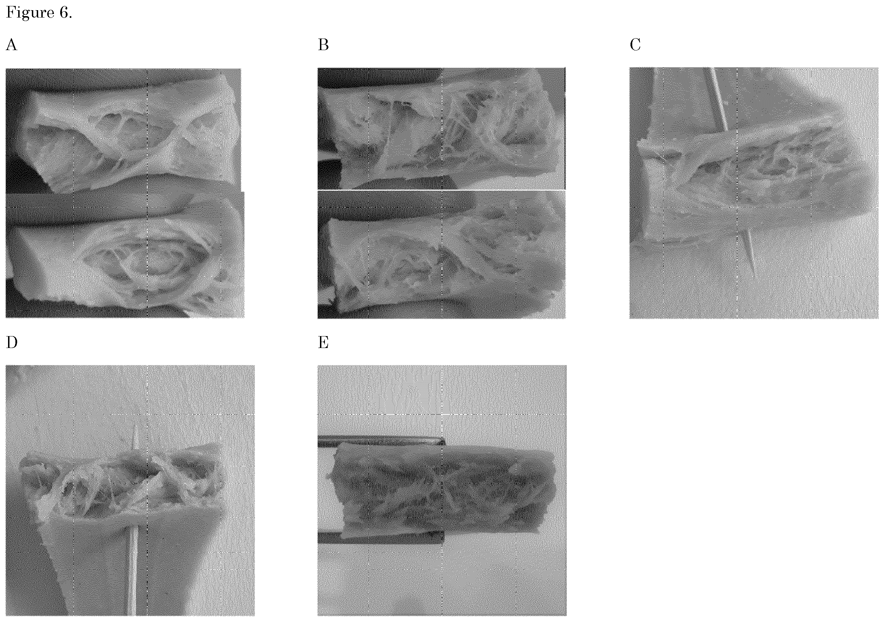

Figure 6. Photographs of macrostructures after shearing a composition comprising wheat gluten (WG), soy protein isolate (SPI) and different starches. (A) The obtained macrostructure of a reference sample comprising 15% of WG, 15 wt % of SPI, and 1 wt % of NaCl, that was sheared for 15 min and 30 rpm (shear rate of 39 s$^{-1}$) at 120 °C is shown. Furthermore, the macrostructures of different samples comprising WG, PPI and a starch is shown: (B) a sample comprising 3 wt % of maize starch, 12 wt % of WG, 15 wt % of SPI and 1 wt % of NaCl, sheared for 15 min and 30 rpm (shear rate of 39 s$^{-1}$) at 120 °C; (C) a sample comprising 3 wt % of Hylon® VII unmodified food starch, 12 wt % of WG, 15 wt % of SPI and 1 wt % of NaCl, sheared for 15 min and 30 rpm (shear rate of 39 s$^{-1}$) at 120 °C; (D) a sample comprising 3 wt % of Hylon® VII unmodified food starch, 12 wt % of WG, and 15 wt % of SPI, sheared for 15 min and 30 rpm (shear rate of 39 s$^{-1}$) at 120 °C; and (E) a sample comprising 5% of National™ B37 food starch, 10% of WG, 15% of SPI, and 1% of NaCl, sheared for 15 min and 30 rpm (shear rate of 39 s$^{-1}$) at 120 °C

## 4 DETAILED DESCRIPTION OF THE INVENTION

### 4.1 Definitions

As are used herein, the singular forms "a", "an" and "the", are intended to include the plural forms as well.

As is used herein, the term "or" includes any and all combinations of one or more of the associated listed items, unless the context clearly indicates otherwise (e.g. if an "either ....or" construction is used).

As are used herein, the terms "comprise" and "comprising", and conjugations thereof, are open language and specify the presence of stated features but do not preclude the presence or addition of one or more other features.

It will be understood that when a particular step of a method is referred to as subsequent to another step, it can directly follow said other step or one or more intermediate steps may be carried out before carrying out the particular step, unless specified otherwise.

As is used herein, the term "wt %", or "weight percentage", or "percentage by weight", refers to the mass fraction of a substance in a composition divided by the total mass of said composition, expressed as a percentage between 0 and 100.

As used herein, the term "dry based (d.b.)", refers to a weight percentage that is calculated based on the dry weight of a composition.

As used herein, the term "wet based (w.b.)", refers to a weight percentage that is calculated based on the wet weight of a composition.

As is used herein, the term "dry matter content (dmc)", refers to a wet based (w.b.) weight percentage (wt %) of the total dry solids in relation to the total weight of the composition.

As is used herein, the term "protein", refers to polymers of amino acid residues of any length.

As is used herein, the term "proteinaceous", refers to a material that comprises biomolecules consisting of one or more polypeptide chains such as proteins. Said material preferably comprises 50-100 wt % of proteins, more preferably 80-100 wt %.

As is used herein, the term "plant-based protein", refers to protein derived and/or isolated from one or more plant or modified plant sources. Plant-based proteins include oilseed proteins, cereal proteins, leaf proteins and legume and pulse proteins. Plant-based proteins can be categorized by their protein content and are commercially available as flours, protein concentrates and protein isolates. A protein concentrate generally has plant protein percentage between 50% and 75% on a dry weight basis. A protein isolate in general contains at least 75% plant protein by weight. Flours on the other hand generally have a protein percentage less than 50% on a dry weight basis.

As is used herein, the term "flour", or "meal", relates to flour obtained from the milling of raw proteinaceous material such as wheat, beans, grains, seeds etc.

As is used herein, the term "oilseed protein", refers to protein obtained from a seed from an oil plant. Examples of suitable oilseeds include soybean, rapeseed (canola), cottonseed, peanut (groundnut), sunflower seed, pumpkin seed, sesame, sesame seed, safflower, flax seed, mustard seed and linseed.

As is used herein, the term "cereal protein", refers to protein obtained from cereal grain. Examples of a suitable cereal grain include wheat, corn, rice, barley, oats, sorghum and grain amaranth.

As is used herein, the term "leaf protein", refers to protein contained in plant leaves. Examples of leaves from which proteins can be obtained are alfalfa, lucerne, tobacco, mulberry bush, grass, sugar cane, sugar beet and clovers.

As is used herein, the term "legume protein", refers to a protein derived from a legume. A pulse is the edible seed from a legume plant. Examples of legume and pulses from which proteins can be obtained are beans, faba beans (*Vicia Faba L.*), chickpeas, guar, lentils, lupines and peas.

As is used herein, the term "starch", refers to a high-polymeric carbohydrate comprising glucose units joined by glycosidic bonds. Starch occurs in plant material in the form of white granules, usually made up of both a linear polymer (i.e. amylose) and a branched polymer (i.e. amylopectin). Starches of different botanical origins may exhibit differences in their physical characteristics and chemical composition. Typical starch sources are cereals, tubers, roots, legumes, and fruits. The term starch includes native starches and functionalized starches.

As is used herein, the term "native starch", refers to a naturally occurring starch, such as a starch obtained from a plant. Said plant can be a naturally occurring plant, such as a plant obtained by standard breeding techniques, or a genetically modified plant such as a plant obtained by transformation, or other genetic or chromosomal manipulation methods. A native starch is not modified during or after extraction from the plant it was obtained from. A native starch can be an unrefined or refined starch. An unrefined starch may include non-starch material such as protein or fat. An unrefined starch can be present in the form of a starch-containing protein meal, starch-containing protein concentrate and starch-containing protein flour. A refined starch is a starch extracted from seeds, grains, cereals, tubers or other plant material and has been processed to remove substantially all non-starch materials.

As is used herein, the term "functionalized starch" or "functional starch", refers to a starch that is modified by chemical and/or physical means. Physical modifications are e.g. dry-heating, agglomeration and granulation, multiple deep freezing and thawing, and pre-gelatinization. Chemical modifications include hydrolysis, oxidation, esterification, etherification, crosslinking, hydroxypropylation and acetylation. A functionalized starch includes pre-gelatinized starch, heat-moisture treated starch and thermally inhibited starch.

The term "pre-" in "pre-functionalized starch" refers to the fact that the starch is at least partially functionalized prior to use in the intended application e.g. in the High Temperature Shear Cell (HTSC) or extrusion device.

As is used herein, the term "pre-gelatinized starch", is a term well known in the art and refers to a starch which has been cooked in an aqueous suspension to the point where swelling of the granules takes place, and a paste is formed. Whether starch is pregelatinized can be determined by viewing the starch under polarized light. Starch that is not pregelatinized exhibits birefringence. Pre-gelatinized starch does not. The starch paste may then optionally be dried in a conventional manner for example by drum or spray drying. A pre-gelatinized starch binds water at a lower temperature, when compared to a native starch.

The term "pre-" in "pre-gelatinized starch" refers to the fact that the starch is at least partially gelatinized prior to use in the intended application e.g. in the High Temperature Shear Cell (HTSC) or extrusion device.

As is used herein, the term "heat-moisture treated starch", refers to a starch which has been subjected to a heat treatment under controlled moisture conditions, the conditions being such that the starch undergoes neither gelatinization (i.e., exhibits substantially no loss of birefringence) nor dextrinization. Methods for generating heat-moisture-treated starch are known in the art, for example as described in Hoover, 2010 (Hoover, 2010. Critical Reviews Food Science Nutrition 50: 835-847). A thus treated starch may show differences in X-ray pattern, crystallinity, starch chain interactions, swelling, amylose leaching, gelatinizing, pasting, gelling and digestible properties of starch. These changes may vary with the source of starch, moisture content, incubation temperature and time, as is known to the skilled person.

As is used herein, the term "thermally inhibited starch", refers to a starch modified in a process that alters the function of the native starch so that it functions in aqueous solution like chemically crosslinked starch. Various methods for making thermally inhibited starch are known. In one method starch is as described in US 6,221,420 by dehydrating starch to a water level below 1% at a temperature between 100 and 125 °C, followed by heat-treating the dry starch at about 140 °C, or by heating an alkaline starch at a higher temperature of e.g. between 140 and 190 °C, in the presence of more than 1% water on a weight basis, as described in US10316107B2.

As is used herein, the term "endogenous starch", refers to starch that is naturally present in a product or composition. The term "endogenous starch" is used herein as opposed to "exogenous starch", which refers to a starch that is a purposely added to a product or composition. For example, to obtain a protein isolate all endogenous starch is removed preferably. In case a starch is added to a protein isolate, the added starch is termed exogenous starch.

As is used herein, the terms "waxy" or "low amylose" refers to a starch containing no more than 10 % by weight amylose. As used herein, "intermediate amylose" is intended to include starch containing more than 10 %, but less than 40% by weight amylose. As used herein, "high amylose" is intended to include starch containing more than 40 % by weight amylose.

As is used herein, the term "gluten", refers to a protein product comprising, or consisting of, proteins from grains such as wheat, rye, barley and mixtures thereof. Said gluten preferably is purified by removal at least a part of the starch that is present in the grains. However, it is well known in the art that commercial gluten may still contain a starch, e.g., commercial wheat gluten may contain up to ~12% of starch.

As is used herein, the term "botanical source" or "botanical origin", refers to a plant from which a starch or plant-based protein is obtained. A plant typically belongs to a particular plant family, genus and species. A starch and plant-based protein are considered to be from a different botanical source, if they are derived from a different plant species. For example, a starch obtained from a corn plant and a plant-based protein derived from a wheat plant are considered to be from a different botanical source.

As is used herein, the term "fibrous structure", refers to a material that comprises filaments such as fibers or combination of fibers and layers. For example, meat is composed of myofilaments that are surrounded and supported by collagen and elastin fibers. The tenderness of meat is related to the spatial organization of these fibers. The amount of water held between the fibers is connected to the juiciness of meat. In case of fish, a more layered or flaky structure is present. Fibrous proteinaceous structures that are generated, for example, from plant-based proteins, try to mimic these fibrous meat structures in meat and fish alternatives.

As is used herein, the term "texturizing", refers to methods to induce a fibrous structure using plant-based proteins. Texturizing may be performed by methods known in the art such as extrusion, including high moisture extrusion, shear cell technology, 3D printing, spinning, or a combination thereof.

As is used herein, the term "mouthfeel", refers to the physical sensation in the mouth caused by food or feed, distinct from taste. It is a fundamental sensory attribute which, along with taste and smell, determines the overall flavor of a food item. Mouthfeel is also sometimes referred to as texture. Mouthfeel is often related to a product's water activity, whereby a hard or crisp product has low water activity and a soft product often has intermediate to high water activity.

As is used herein, the term "meat analogue", or "meat substitute" refers to a product that is not of animal origin, but may be similar in structure, texture, and/or other properties to animal meat.

As is used herein, the term "tensile stress", or "tensile strength", refers to a force that can be applied over an area which acts perpendicular to the surface of the object, attempting to elongate it. The force is expressed in Newtons per square meter, also known as Pascal (Pa). Tensile stress can be expressed mathematically by the formula:

$$\text{True stress } \sigma_t \text{ (Pa) } \sigma_t = \frac{F}{A_0}\frac{h}{h_0} \qquad \text{(Formula 1)}$$

wherein F refers to the Force at specimen break (N), $h_0$ refers to the initial length of the specimen (cm), h refers to the length of the specimen at break (cm), and $A_0$ refers to the initial cross section of the sample.

As is used herein, the term "tensile strain", refers to the deformation or elongation of a solid body due to the application of a tensile stress. Tensile strain can be expressed mathematically by the formula

$$\text{True strain } \varepsilon_t \text{ (-) } \varepsilon_t = ln\left(\frac{h}{h_0}\right) \qquad \text{(Formula 2)}$$

wherein $h_0$ refers to the initial length of the specimen (cm), and h refers to the length of the specimen at break (cm).

As is used herein, the term "Young's modulus", refers to the resistance of a material to elastic deformation. In other words, the term refers to the stiffness of a material and gives information about the initial deformation of a material. The Young's modulus can be obtained by taking the slope of the initial, linear part of the stress-strain curve. Young's modulus is usually expressed in Pascal (Pa). A low Young's modulus value means a solid is elastic. For example, rubber may have a Young's modulus of 0.01-0.1 GPa. A high Young's modulus value means a solid is inelastic or stiff. For example, diamond may have a Young's modulus of 1050-1210 GPa.

As used herein, the term "stress-strain curve", refers to a curve generated during tensile testing of a material sample and is a graphical representation of the relationship between the stress o and the strain ε.

As is used herein, the term "anisotropy", refers to a physical property which has a different value when measured in different directions. A material is called "anisotropic" if the properties of the material vary depending on the direction in which they are measured.

The term "anisotropy ratio", as is used herein, refers to ratio of a physical property which was measured in different directions. As used herein, the anisotropy ratio of a material is the ratio of a measurement of a material in a first direction, i.e. parallel to the shear flow, and a measurement of a material a second direction, i.e. perpendicular to the shear flow. These measurements can include the tensile strength, the tensile strain or the Young's modulus. A fibrous structure preferably has an anisotropy ratio greater than 1.5. For example, a fibrous structure having a Young's modulus in the direction parallel to the shear flow that is more than double from the Young's modulus in the direction perpendicular to the shear flow, has an anisotropy ratio (in terms of Young's moduli) of more than 2.

*4.2 Plant-based proteins*

In the development of plant-based meat analogues, the selection of plant protein ingredients is the starting point for product development. The actual choice is often dictated by the protein availability, the yield of the crops and the protein extraction potential. A common characteristic observed among the most frequently used plant-based ingredients is that they are originally by-products of the food industry. For example, soy meals collected after oil extraction were formerly used as animal feed. However, the high protein content, balanced amino acid composition, wide availability, low price and the specific protein functionalities of soy (such as good gelling properties and water holding capacity), made way for the production of protein-rich food ingredients that are used in meat analogue applications. The popularity of soy however decreased in recent times in western countries because of criticism on crop production (i.e. deforestation of the rainforest) and potential negative health effects associated with the presence of specific antinutritional factors. Protein from wheat, which contains a high amount of gluten, is another frequently used ingredient. Gluten has unique film-forming properties that result in small fibers when applied in meat analogues. Besides, it is cost-effective because the starch present in wheat flour is used industrially as well. The main drawback is that part of the population is intolerant to gluten. Apart from soy protein and gluten, other protein-rich oilseeds and leftovers from oil production are also considered as an ingredient for meat analogues, for example, sunflower and rapeseed meals. In addition to that, more and more crops are explored for their protein content, for example, rice, other cereal and bean flours. Derivatives of these crops such as meals, concentrates and isolates can be used in traditional and novel meat analogues.

The at least one plant-based protein as comprised in the composition according to the invention, can be a protein from any plant source including oilseed proteins, cereal proteins, leaf proteins and legume and pulse proteins. The plant-based protein as comprised in the composition according to the invention preferably is wheat protein, a faba bean protein, pea protein, soy protein, or combination thereof.

Plant-based proteins can be isolated from plant materials such as pulses, grains, leaves or seeds by different extraction and fractionation methods which are known to the skilled person. Several possible methods are described by Sim et al. (2021. Foods 10: 1967) and Kumar et al. (2021. Food Hydrocoll 115: 106595). Depending on the plant source material, different approaches are used for plant-based protein extraction. These approaches include chemical extraction, enzyme-assisted extraction, physical extraction, or a combination thereof.

Processing of plant sample for extraction of protein is usually divided into three steps, i.e., defatting of sample, extraction and precipitation of protein. In defatting, solvents like petroleum ether, n-hexane and n-pentane are used to remove the compounds that interfere with protein extraction. Secondly, proteins are extracted using salts (NaCl), ionic detergents (SDS) and non-ionic detergents (NP-40 and Triton X100) in hot or cold water based aqueous extraction. Alcohols (ethanol, methanol), buffers/strong denaturants (for example urea or Tris-HCl, phenol) are used in organic solvent based extraction. A number of modern techniques like microwave, ultrasound and enzymes can further assist in improving the protein extraction efficiency. Lastly, the isolated protein is enriched/concentrated/precipitated by using chemical or solvents such as ammonium sulphate, ethanol, methanol, acetone, citric acid, trichloroacetic acid, hydrochloric acid and isoelectric point precipitation. The precipitate contains protein which can be recovered by centrifugation. Besides protein, a large number of non-proteinaceous compounds can still be present in the protein precipitate.

The plant-based protein as comprised in a composition according to the invention can be a protein isolate or a less refined form of plant-based protein such as a protein concentrate or flour.

*4.3 Starches*

Starch is used as an ingredient in commercially available meat analogues and real meat products, though mostly applied in low quantities. Starch is added as a minor ingredient next to other purified ingredients, such as protein isolates or concentrates. Starch is often added to food products as a filler or stabilizer and can modify water holding capacity of these products. Such purposely added starch is called exogenous starch and can come from a different source than the protein ingredient of the food product to which the starch is added. Exogenous starch can be modified to improve its functionality even further. The choice of starch is based on the functionality and availability. Endogenous starch, as opposed to exogenous starch, is naturally present as a component that remains to a certain extend in an ingredient after purification.

The at least one starch as comprised in a composition according to the invention, can be obtained from any typical starch source including corn (maize), peas, chickpeas, lentil, potatoes, sweet potatoes, bananas, barley, wheat, rice, oats, sago, amaranth, tapioca (cassava), arrowroot, canna, sorghum and taro. Preferably, the at least one starch as comprised in the composition according to the invention is a maize starch, pea starch, or combination thereof.

The at least one starch as comprised in the composition according to the invention, can be a native starch or a (pre-)functionalized starch. Native starch has some less favorable properties, including limited solubility in cold water, loss of viscosity and thickening power after cooking, high tendency to retrogradation, low shear resistance and thermal resistance (Singh et al., 2007. Food Hydrocoll 21: 1-22). Therefore, starch is often modified to tune its functional and physicochemical properties towards food application. The methods of modification and functionalization of starch are known to a skilled person and have been described in, e.g., Joly *et al.* (2009. Springer New York, 1st edition, editor R. Tarté, chapter 2 ISBN:9780387713267). Starch modifications can be on chemical and physical basis. Physical modifications include, e.g., dry-heating, agglomeration and granulation, multiple deep freezing and thawing and pre-gelatinization. The latter can be achieved by drum drying, causing the pasting behavior of the starch to change. These thermo-mechanical treatments applied to native starch result in thermally inhibited starch. Chemical modifications can alter the properties of starch even further. Chemical modifications include hydrolysis, oxidation, esterification, etherification, crosslinking, hydroxypropylation and acetylation. Hydrolysis can be achieved by enzymatic or acid hydrolysis leading to a breakup of the starch molecules into dextrin, maltose and glucose. The main effect of (partial) hydrolysis is a strongly reduced viscosity when in solution. Esterification results in increased viscosity, due to the fact that the gelatinization temperature is lowered and the tendency to form a gel is reduced. Esterified starch is used as an emulsion stabilizer and for encapsulation, and can also be used to partially replace fat in emulsion based food products, such as plant based sausages. As a thickening agent in foods, etherified or cross-linked starch is used frequently. Both modifications lead to decreased solubility of starch, by adding inter- and intramolecular bonds, strengthening and stabilizing the starch polymers. Cross-linked starch is increasingly resistant to high and low temperatures and pH, however also come with smaller swelling volume. Hydroxypropylation is a modification of starch based on etherification with propylene oxide in the presence of an alkaline catalyst. Hydroxypropylated starch improves freeze-thaw stability and decreases gelatinization and pasting temperatures. In acetylated starch, hydroxyl groups are replaced with acetyl groups, increasing the viscosity as well as the solubility.

A native starch as comprised in the composition according to the invention can be a refined pure starch or unrefined starch such as a starch-containing flour, starch-containing concentrate, starch-containing isolate or other starch-containing plant derivative. Starch-containing flours can be obtained through methods such as dry-milling and/or air classification.

The starch as comprised in the composition according to the invention preferably is a pre-functionalized starch, more preferably a heat-treated starch, most preferably, a pre-gelatinized starch.

A functionalized starch can be obtained by functionalizing a refined starch or by functionalizing an unrefined starch which is a starch-containing mixture such as a meal, a protein concentrate or a protein flour.

A starch as comprised in a composition according to the invention, can be an endogenous starch or an exogenous starch. An advantage of using endogenous starch is sustainability. The current focus of the meat analogue industry is on the use of purified protein ingredients, e.g. Pea Protein Isolates (PPI), from which the endogenous starch is removed completely. This approach sometimes requires the later addition of exogenous, potentially modified, starch for functionality. Consecutive removal and addition of starch seems contradictory and inefficient from a sustainability point of view, as this requires a lot of energy and leads to high material losses. Therefore, the use of endogenous starch and the possibility of "in-situ" functionalizing endogenous starch are promising options promoting the use of less refined and therefore more sustainable ingredients in fibrous meat analogues.

*4.4 A composition comprising at least one plant-based protein and at least one starch*

A composition according to the invention comprises at least one plant-based protein and at least one starch, wherein the protein content of the composition is at least 25 wt% based on the total dry weight of the composition, preferably at least 30 wt%, more preferably at least 35 wt%. Preferably, the protein content of the composition is less than 95 wt% based on the total dry weight of the composition, more preferably less than 90 wt%, more preferably less than 85 wt%.

The at least one starch as comprised in a composition according to the invention is present at 3-40 wt%, preferably 3-35 wt %, more preferably 3-30 wt%, based on the total dry weight of the composition if the at least one starch is a native starch with an amylose content between 10 and 40%, preferably between 15 and 40%, more preferably between 20 and 40%, most preferably between 25 and 40%.

The at least one starch as comprised in a composition according to the invention is present at 3-30 wt%, preferably 3-25 wt %, more preferably 3-20 wt%, based on the total dry weight of the composition if the at least one starch is a native starch with an amylose content between 40 and 80%, preferably between 40 and 75%, more preferably between 40 and 70%.

The at least one starch as comprised in a composition according to the invention is present at 3-70 wt%, preferably 3-65 wt %, more preferably 3-60 wt%, based on the total dry weight of the composition if the at least one starch is a pre-functionalized starch with an amylose content between 10 and 80%, preferably between 15-75%, more preferably between 20-70%.

The composition according to the invention may further comprise 0.5 - 4 wt %, preferably about 1 wt %, based on total weight of the composition of a salt, preferably selected from sodium chloride (NaCl) and/or potassium chloride (KCl). As described herein above, salt can be added during the extraction and fractionation process of plant-based protein. Another important reason to add salt to a composition according to the invention intended for consumption, is to enhance the taste. Furthermore, salt also contributes to the extension of the shelf life of the product to which it is added and can improve a product's texture. Salt addition to the protein base of the meat analogues, can lead to the solubilisation and unfolding of the protein affecting its structuring potential. The high level of sodium in the western diet and the increased health risks that it brings have raised concerns. Sodium reduction strategies include the use of salt replacers e.g. potassium chloride and/or flavour enhancers.

The composition according to the invention may further comprise 55-75 wt% of water based on total weight of the composition. Said water preferably is demineralized water. Water can be added to a composition according to the invention for several reasons. Water can act as hydration medium for the dry ingredients and as a plasticizer and reaction agent during further processing. In extrusion processing specifically (see below), water determines the viscosity of the melt, participates in the chemical reactions (starting with the induction of conformational changes in protein), influences the friction and acts as an energy transfer (thermal and mechanical) medium. In low moisture extrusion, the moisture content together with the temperature affects the expansion and porosity of the product as it is observed for starch-containing extrudates. With increasing moisture content during highly concentrated plant protein extrusion, an increase in the reaction rates of proteins is reported. The disulphide bonds, hydrogen bonds and hydrophobic interactions are promoted at higher moisture levels. This can lead to a high degree of fibrous structure formation. In addition, many of the functional properties of the proteins as swelling, viscosity, gelation, emulsification, and foaming are affected by the availability of water in the food system and the degree of interaction with the biopolymers. Moreover, the higher water content can be desirable since sensory properties such as juiciness and mouthfeel of meat analogues are retained longer. Besides, meat analogues with high water content can also be baked and cooked similarly to meat. Lastly, the inclusion of water in food reduces the ingredient costs.

The composition according to the invention preferably is a powder, a slurry or dough. If the composition according to the invention only comprises dry components, the composition generally is in the form of powder. If these dry components are mixed with liquid components such as water, the composition can be in the form of a slurry or dough. The term "slurry" refers to an aqueous composition that is pourable, while the term "dough" refers to aqueous composition that is not pourable. A dough typically has higher solids and a more structured viscous material than a slurry.

A composition according to the invention is considered gluten-free or substantially gluten-free if the composition does not contain gluten from grains such as wheat, barley or rye in an amounts exceeding 20 part per million (ppm).

*4.5 Texturizing a composition according to the invention*

The invention relates to a process, comprising the steps of providing the composition according to the invention and texturizing said composition by applying shear force at a temperature between 80 °C and 160 °C, preferably between 120 °C and 140 °C.

Forced assembly of a composition according to the invention, herein termed texturizing by shear force, can be performed by several techniques including extrusion, spinning, shear cell, 3D printing techniques and spinning.

Extrusion has been used for texturizing proteins from various sources, such as soy flours, wheat, and dairy proteins. Plasticization, melting and break-up of proteins occur in an extruder barrel and fibrous textures can be formed due to alignment of the proteinaceous phases in long cooling dies forming an anisotropic product (Aguilera and Stanley, 1993. Food Rev Int 9: 527-550; Cheftel et al, 1992. Food Rev Int 8: 235-275). The ratio of longitudinal versus transversal resistance to stretching is indicative of anisotropy, which generally indicates fiber quality (Thiebaud et al., 1996. Food Science Technol 29: 526-535). Typical ratio values of the longitudinal and transversal resistance to stretching are, for instance, 1-5 for fibrous extrudates from defatted soy flour, depending on barrel temperature and pH (Cheftel et al., 1992. ibid), and 1-2 for extrudates of defatted soy flour and pork as determined by cutting (Liu et al., 2005. Food Sci Techn Int 11: 463-470).

Extrusion may be performed at low, intermediate and high moisture content. Moisture is an important factor and affects the mix viscosity through acting as a plasticizer in the extrudate. As is known to a person skilled in the art, increasing moisture will decrease viscosity, torque, and increase bulk density. This will reduce the pressure at the die. Most extrusion processes for food processing maintain a moisture level below 40%, that is low to intermediate moisture. High-moisture extrusion, also known as wet extrusion, often employs twin screw extruders (TSE), which have a more efficient conveying capability.

A wide range of product characteristics can be achieved by altering process conditions during extrusion processing. Process conditions in the screw section can be varied through independent process parameters, such as barrel temperature, screw speed, and configuration, whereas process conditions in the die section can be varied through cooling rate and die geometry. This improves the flexibility of the process to a significant extent. Extrusion is a multivariate complex process, and the sections are directly linked to each other. Any change in one section (e.g., cooling rate in the die section) results in a change in process conditions in the other section (e.g., pressure and filling degree in screw section).

Appropriate pretreatment may allow for the use of a larger spectrum of proteins and other ingredients such as starches, fibers, and additives. By employing an additional processing step, the extruded mass can be subjected to further treatment using forming units (additional plasticizing devices), where it is chilled, unified, textured, boiled, cooked, marinated and/or molded into strips, patties, or other forms. High-moisture texturized products are usually processed and packaged in wet condition (pouches, cans, or frozen).

Shear-induced texturization of a composition according to the invention can also be achieved by subjecting said composition to a simple linear shear profile, which can for instance be established between a plate and a cone; between a cone and a cone; or in a couette reactor. The sample material is placed in the shearing zone space between two parts (cones, plates or cylinders). In all divices, both the stationary and rotating parts can be heated and/or cooled. Heating may be performed with, for example, water, steam or oil. As an alternative, or in addition, the shear device is placed in an incubator that is set at a temperature of 80-160 °C. Cooling may be performed, for example, with air and/or water. In case of a couette, the space between the two cylinders can have a width of 5-100 mm between the two cylinders, preferably 10-50 mm, such as 25-30 mm, and has a volume of 2-50 liters, preferably 5-25 liters, such as 7 liters, 8 liters, 9 liters, or 10 liters, a 30 mm distance between the two cylinders. Wageningen University, together with TU-Delft, developed a large scale Couette shear device based on a concentric cylinder rheometer concept. An advantage of such system is the production of larger pieces with fibrous structure by a simple, mild, and cost-effective technology.

Another technique for texturizing a composition according to the invention is based on aligning such blend due to shear and elongational flow in a spinneret and during coagulation (Gallant et al., 1984. Food Microstructure 3: 175-183). Typically, resulting fibers (-100 $\mu$m) are coagulated in baths containing acid and salt solutions, and washed afterwards. Hydrocolloids, such as carrageenan (Downey and Burgess, 1979. J Food Techn 14: 21-31; Downey and Burgess, 1979. J Food Techn 14: 33-40) and alginate (Antonov et al, 1985. Die Nahrung 29: 39; Suchkov et al., 1980. Nahrung-Food 24: 893-897), or vegetable proteins, such as soy (Suchkov et al., 1988. Nahrung-Food 32: 669-678) or field bean protein (Suchkov et al., 1988. Nahrung-Food 32: 679-689), were used in combination with casein in a two-phase or mulitphase blend in order to decrease the solubility in water of the casein-based fibers produced.

Yet another technique for texturizing a composition according to the invention is based on three-dimensional (3D) printing, such as powder bed printing (PBP). Such 3D printing processes start with a 3D model, compute cross-sections of that model, and then deposit the cross-sections sequentially on top of each other until the final geometry is achieved. The major challenge in printing food, for example via powder bed printing, is the creation of varying food structures that will result in the perception of various textures. The interactions between food ingredients define what is called the food microstructure.

Three-dimensional printing methods include extrusion-based printing, whereby an extrusion head pushes food materials through a nozzle typically by way of compressed air or squeezing; hot-melt extrusion, in which the food material is heated to above its melting point in the printing head; laser sintering such as selective laser sintering, in which powdered food material is heated and bonded by a laser; binder jetting or powder bed printing, in which powdered layered food material is bonded together by a liquid binder; and inkjet printing, which employs dropping of edible food material onto the surface of the edible food product, without contacting the food product. Inject printing may employ a multi-printhead to print different ingredients at the same time or in succession on a food product.

Yet another technique for structurizing a composition according to the invention is based on a spinning process such as a wet-spinning process. US-A-2,682,466 describes edible protein fibers made by dissolving a protein-rich raw material in an alkaline medium, and subsequently extrusion in the form of thin jets into an acidic salt bath in which the fibers coagulate.

Disadvantages of this spinning method are the large water waste streams from the coagulation and washing baths. Further, the necessity of low pH and high salt concentrations, and chemical additives to coagulate the fibers make the design of a process and an apparatus for production of fibers suitable for consumption a complex matter. Further, the combination of fibers obtained through spinning to a fibrous structure is complex, if at all feasible. In NL-C-1019816 products are prepared, which products are aimed to replace meat and fish, and can be baked.

The texturizing step of a composition according to the invention is preferably carried out at a temperature lower than the denaturation temperature of the protein material. As to the simple shear per se the lower limit of the temperature is not critical, as long as the protein solution or dispersion is capable of flowing. Effectively, a modest heating step leads to a quicker alignment. In practice, the process of the invention is suitably carried out in the temperature range of about 80-160 °C, preferably from 100-150 °C, and more preferably in the temperature range of 120-140 °C.

The texturizing step of the process according to the invention is preferably performed by extrusion, including high moisture extrusion, or shear cell technology.

In an embodiment, a composition according to the invention may be mixed with animal-based proteinaceous material, such as milk protein and/or meat protein.

*4. 6 Fibrous structures obtained from a composition according to the invention*

The invention furthermore provides a fibrous structure generated from a composition according to the invention. Said fibrous structure is anisotropic in parallel and perpendicular direction. Said anisotropy ratio can be determined in terms of Young's moduli, tensile strain or tensile stress.

Preferably, said fibrous structure has an anisotropy ratio greater than 1.5. Preferably, said fibrous structure preferably has an anisotropy ratio between 1.5 and 20, more preferably between 2 and 15, most preferably between 2.5 and 10, such as 4, 5, 6, 7, 8 or 9.

*4. 7 Starch-containing edible products*

The invention further provides an edible product comprising a fibrous structure according to the invention. Said edible product preferably is a food or feed product, or an ingredient for a food or feed product. Most preferably, said edible product is a meat or fish analogue.

Characteristics of a food or feed product based on a fibrous structure according to the invention are that it allows for a certain elastic deformation, has appearance and/or behavior comparable with meat and fish, has good ab- and adsorption properties for taste and aroma compounds, and has a proper mouthfeel. A preferred food or feed product is characterized by whole cut products, such as chicken meat replacers including chicken nuggets and chicken wings; and beef steak replacers. In case of, chicken meat balls and chicken sausages such as chicken frankfurters, the shredded version of the said product can be used as one of the important ingredients in those products, next to oil and binding agents.

A food product primarily exhibits elastic deformation (elastic deformation: G'>G") upon applying a stress, and for which a relatively small stress is needed to obtain a substantial deformation, either due to low elastic modulus or small yield stress.

The appearance and/or behavior comparable with meat and fish relates preferably both in the ability of processing during cooking, including frying and stir-frying, and in consumption.

Furthermore, it is desired to provide a fibrous food material having good ab- and adsorption properties for taste and aroma compounds, such as herbs and seasoning compounds.

A typical starch-containing plant-based meat analogue contains, apart from starch and protein in textured and non-textured form, a significant amount of water, flavourings, oil or fat, binding agents and colouring agents. Most of the ingredients used in those products are highly refined. That is the reason that meat analogues face more and more criticism for being artificial products. The use of less refined ingredients is a development that gains traction in recent years.

The invention further provides the use of a fibrous structure according to the invention in the manufacture of an edible product such as a meat or fish analogue.

An edible product according to the invention is considered gluten-free or substantially gluten-free if the product does not contain gluten from grains such as wheat, barley or rye in an amounts exceeding 20 part per million (ppm).

For the purpose of clarity and a concise description, features are described herein as part of the same or separate aspects and preferred embodiments thereof, however, it will be appreciated that the scope of the invention may include embodiments having combinations of all or some of the features described.

The invention will now be illustrated by the following examples, which are provided by way of illustration and not of limitation and it will be understood that many variations in the methods described and the amounts indicated can be made without departing from the spirit of the invention and the scope of the appended claims.

5 EXAMPLES

General Materials and Methods

*Materials*

Vital wheat gluten (WG) was obtained from Roquette (Lestrem, France) and had a protein content of 74.6% w.b. (Kjeldahl, N-conversion factor = 6.25) and a dry matter content of 93.9%. Amioca™ starch (AS) a waxy maize starch, maize starch (MS) and Hylon VII® unmodified food starch (HVII), a high amylose corn starch, were provided by Ingredion (Hamburg, Germany) and had an amylose content of 1%, 25% and 68% respectively. Faba bean Meal (FM) was also provided by Ingredion (Hamburg, Germany) and had a protein content of 28.6% (Dumas, N-conversion factor = 5.7). National™ B37, food starch, a pregelatinized maize starch and Purity P® 1002, pea starch, were provided by Ingredion. Pea protein isolate (PPI) had a protein content of 85.2% (w.b.). Soy protein isolate (SPI) had a protein content of 91.9% (w.b.). The composition of the materials is listed in Table 1. Sodium chloride (NaCl) was acquired from Sigma-Aldrich (Zwijndrecht, The Netherlands). All components were kept at room temperature unless stated otherwise.

Table 1: Composition of the raw materials used in the experiments. Abbreviations: FPM:, WG: wheat gluten, MS: Maize starch, AS: Amioca™ starch, HVII: Hylon® VII unmodified food starch.

|  | Dry matter (%) | Protein content (w.b.) (%) | Starch content (%) | Amylose content of the starch (%) |
|---|---|---|---|---|
| FM | - | 28.6 | 38.5 | 40 |
| WG | 93.9 | 74.6 | 12.6 | - |
| PPI | 95.4 | 85.2 | - | - |

(continued)

| | Dry matter (%) | Protein content (w.b.) (%) | Starch content (%) | Amylose content of the starch (%) |
|---|---|---|---|---|
| SPI | 95.4 | 91.9 | - | - |
| MS | 91.9 | - | >97 | 25 |
| AS | 93.5 | - | >97 | 1 |
| HVII | 92.0 | - | >97 | 68 |

*Gelatinization*

Gelatinized Maize Starch (PMS) and pre-heated FM (PFM) were obtained by creating 33.3% (w.b.) MS or FM slurries in milliQ water, placing it in a sealed plastic bottle and heating it for 60 min at 90°C in a shaking water bath. The obtained gel was kept in the sealed bottle at 4°C until use, but at least for 24 h. The dry matter content of PMS was determined to be 33.1% (w.b.) using oven drying at 105°C for 48 h.

*High-temperature Shear Cell (HTSC)*

Doughs containing demineralized water, NaCl, gluten and starch (MS, PMS, AS, National™ B37 food starch, Purity P® 1002, pea starch or HVII) or FM were prepared. Furthermore, as presented in examples 4 and 5, doughs containing demineralized water, NaCl, gluten, starch and PPI or SPI were prepared. The doughs were prepared following a protocol previously reported (Grabowska et al., 2014. Food Res Int 64: 743-751), with some modifications to the temperature used based on findings of Cornet et al. (2021. Food Hydrocoll 120:106788) and to the dry matter content based on preliminary experiments performed on gluten doughs in the lab. The overall dry matter content for the samples containing starch presented in example 1 was kept constant at 40% (w.b.), while the gluten and added starch content were varied to obtain doughs with 0 - 70% starch (d.b.). For the samples containing FM, as presented in example 2, the overall dry matter content was 40%, with a WG:FM ratio of 1:1. For the samples presented in example 3, the overall dry matter content varied from 30 to 44 % (w.b.), while the gluten (WG) to starch ratio was either 2 to 1 or 3 to 1 or 4 to 1. For the samples presented in example 4, the overall dry matter content was kept constant at 35.5 % (w.b.) and the gluten (WG) to starch ratio was 3.2 to 1. For the samples presented in example 5, the overall dry matter content was kept constant at 30 % (w.b.) (for sample without NaCl) or 31 % (w.b.) (for sample with 1 % (w.b.) of NaCl) and the gluten (WG) to starch ratio was 4 to 1 (Maize starch, Hylon® VII unmodified food starch) or 2 to 1 (National™ B37 food stach).

The moisture content of the powders was taken into account when calculating the dry matter content. In general, the doughs contained 1% (w.b.) NaCl, which was dissolved in demineralized water. In examples 3 and 5, some doughs were tested with no added salt. In example 4, doughs contained 0.5 % (w.b.)of NaCl, which was dissolved in demineralized water. The appropriate amounts of faba bean (FM or PFM) or starch (MS, PMS, AS, National B37 food starch, Purity P® 1002 pea starch or HVII) were added and stirred by hand with a spatula until homogeneous. In the cases of PPI (example 4) and SPI (example 5), a premix of starch and PPI or SPI were added to the salt solution and stirred by hand with a spatula until homogeneous. Gluten was added, followed by further mixing.

A high-temperature conical shear cell (HTSC) (Wageningen University, the Netherlands) was used for the structuring experiments. The HTSC was designed in house and reported in previous studies (Dekkers et al., 2018. Food Res Int 107: 281-288; Grabowska et al., 2016. J Food Engin 188: 77-86; Schreuders et al., 2019. J Food Engin 261: 32-39). HTSC is a cone-cone device and the bottom cone can be rotated to produce a steady shear flow, which allows fast heating and cooling using an oil bath during shearing without water evaporation.

The doughs were immediately placed in the High Temperature Shear Cell (HTSC), which was pre-heated to 140°C for the experiments as presented in examples 1 and 2 or to 120°C for the experiments as presented in examples 3,4 and 5. The doughs were sheared for 15 min and 30 rpm (shear rate of 39 s$^{-1}$) at 140°C, for the experiments as presented in examples 1 and 2, or at 120 °C for the experiments as presented in example 3,4 and 5. The reference samples presented in example 3 contained 40 % (w.b.) of wheat gluten, with or without 1% (w.b.) of salt and processed for 15 min and 30 rpm (shear rate of 39 s$^{-1}$) at two temperatures 120 and 140°C. The reference sample presented in example 4 contained 35.5 % (w.b.) of WG, PPI, and salt and was processed at the same conditions. The reference sample presented in example 5 contained 31 % (w.b.) of WG, SPI, and salt and was processed at the same conditions. The HTSC was cooled down to 60°C before opening and removing the sample. The samples were placed in plastic bags, sealed and allowed to cool to room temperature before further analysis. A sample without starch was repeated on every experiment day to monitor the reproducibility of the results throughout the experiment.

*Assessment of the fibrous structure*

The fibrous structure of the samples was assessed visually following a bending procedure for HTSC samples previously described by of Cornet et al. (2021. Food Hydrocoll 120:106788), revealing the potential orientation of the structure in the outer 4 cm of the sample.

*Tensile strength analysis*

The stiffness (Young's Modulus), maximum tensile strength (true fracture stress) and maximum deformation (fracture strain) in parallel and perpendicular direction to the shear flow were obtained performing tensile tests with a texture analyzer (TA.XTplusC, Stable Micro Systems, Surrey, UK). The tests were performed closely following a protocol previously described by Schreuders et al. (2019. J Food Eng 261: 32-39). In short, six dog-bone shaped tensile bars were cut from each HTSC sample, three perpendicular and three parallel to the shear flow direction. The tensile bars were clamped in the texture analyzer with a distance of 15.5 mm between the clamps. A uniaxial tensile test was performed with a displacement rate of 1 mm s$^{-1}$. The force-displacement curves obtained were used to determine the true Hencky's stress ($\sigma$) and strain ($\varepsilon$), which are defined as

$$\varepsilon(t) = \ln \frac{h(t)}{h_0} \qquad \text{(Formula 3)}$$

$$A(t) = \frac{h_0}{h(t)} * A_0 \qquad \text{(Formula 4)}$$

$$\sigma(t) = \frac{F(t)}{A(t)} \qquad \text{(Formula 5)}$$

where ho is the initial length of the sample (15.5 mm), h(t) is the length of the sample at the time of fracture, Ao is the initial cross section area of the sample, A(t) is the cross section area of the sample at time of fracture and F(t) is the force at time the time of fracture. The volume of the tensile bar is assumed to remain constant throughout the measurement. The fracture stress ($\sigma_f$) and fracture strain ($\varepsilon_f$) are defined as o and $\varepsilon$ at the time of fracture, which is defined as the first substantial decrease of the force in the force-displacement curve. The Young's modulus is taken as slope of the initial, linear part of the $\sigma$ over $\varepsilon$ curve (0.05-0.15 of the fracture strain).

Example 1: Effect of different native and pre-functionalized starches on the production of fibrous wheat gluten gels

The effect of different native and pre-functionalized starches, such as pre-gelatinized maize starch, on the production of fibrous wheat gluten gels by the use of a shear cell was demonstrated.
Sheared samples containing up to 40% (d.b.) added native maize starch with amylose content of 25 % (MS) had a fibrous structure. Sheared samples containing up to 70% (d.b.) added gelatinized maize starch (PMS) had a fibrous structure, showing that the gelatinization increased the structuring potential (or ability) of starch in combination with wheat gluten (Figure 1). Sheared samples containing up to 30% (d.b.) added native maize starch with amylose content of 68 % (HVII) had a fibrous structure (Figure 1). Sheared samples containing up to 5% (d.b.) added native maize starch with amylose content of 1 % (AS) had a fibrous structure, higher concentrations did not result in fibrous structures with the exception of the sample having a starch content of 8% AS (Figure 1).
Furthermore, the Young's modulus of the samples was obtained. The Young's modulus is used as a measure for stiffness of a sheared sample and gives information about the initial deformation of the sample.
Samples containing any amount of MS showed a lower Young's modulus than the reference (i.e. a cooked chicken meat reference) (Figure 2A). The Young's modulus in parallel direction decreased with increasing addition of MS, while it was constant and lower for the perpendicular direction. There is no indication of a loss of fibrous structure at 40% MS.
In contrast to this, addition of PMS led to a more gradual decrease of the Young's modulus in perpendicular direction, while in parallel direction it did not alter the Young's modulus up to additions of 50% PMS (Figure 2B). Therefore, the anisotropy of the Young's modulus was largest at 40% PMS.
Samples containing 25-50% added PMS were more anisotropic when measured in parallel than perpendicular to the shear flow direction and the obtained values closely resemble values for cooked chicken meat (Schreuders et al.,

Journal of Food Engineering, 261, 2019). Such product properties are unprecedented, also for samples without starch, containing gluten and other plant-based proteins. At 70% PMS, the Young's modulus in parallel and perpendicular direction were similar, and therefore did not accurately predict the loss of fibrous structure at higher PMS addition.

Addition of AS caused a decrease in Young's modulus in parallel and perpendicular direction alike, matching the values obtained for the addition of MS in the similar range (5%) (Figure 2C).

The addition of HVII had the largest effect on the Young's modulus. It increased in parallel and perpendicular direction, reaching values up to 8 times higher than the reference (Figure 2D). Due to the uniform increase, the anisotropy decreased and was lost, with values overlapping in parallel and perpendicular direction. This confirms the observation made upon bending: addition of HVII made the sample more stiff.

Example 2: Pre-heating of faba bean meal led to formation of fibrous structures

Sheared samples containing 50% (d.b.) FM did not have a fibrous structure. Samples containing 50% (d.b.) PFM did have a fibrous structure, showing that the pre-heating increased the structuring potential (or ability) of FM in combination with wheat gluten (Figure 3).

Example 3: Induction of fiber formation by addition of maize starch with different amylose contents to gluten.

In reference samples, wherein no starch was added, fiber formation was not observed at processing temperatures of 120°C (Figure 4A-B). At processing temperatures of 140°C, the reference sample did show fiber formation (Figure 4C).

Addition of starches (with different amylose contents) to WG induced fiber formation at 30 rpm for 15 minutes at a lower temperature (120°C) compared to the processing of only gluten at 140°C (Figure 4D-G).

Example 4: Induction of fiber formation by addition of different starches to a recipe with pea protein isolate and gluten.

In a reference sample, wherein no starch was added, comprising 17.5% of WG, 17.5 % (w.b.) of Pea protein isolate (PPI) and 0.5 % (w.b.) of NaCl, fiber formation was observed after shearing for 15 min and 30 rpm (shear rate of 39 s$^{-1}$) at 120 °C (Figure 5A)

In the recipe with PPI and WG, part of the gluten could be replaced by different starches (Hylon® VII unmodified food starch, National™ B37 food starch and Purity P® 1002 pea starch) to obtain fibrous products (Figure 5B-E).

Example 5: Induction of fiber formation by addition of different starches to a recipe with soy protein isolate and gluten.

In a reference sample, wherein no starch was added, comprising 15% of WG, 15 % (w.b.) of Soy protein isolate (SPI) and 1 % (w.b.) of NaCl, fiber formation was observed after shearing for 15 min and 30 rpm (shear rate of 39 s$^{-1}$) at 120 °C

(Figure 6A)

In the recipe with SPI and WG, part of the gluten could be replaced by different starches (Maize starch, Hylon® VII unmodified food starch and National™ B37 food starch) to obtain fibrous products (Figure 6B-E).

The reference sample had a mixed texture of fibers and layers (Figure 6A). Samples with added starch had fibrous textures that were thinner or thicker depending on the type of starch (Figure 6B-E). In all cases, samples with starches had a better bite (expert's opinion).

**Claims**

1. A composition comprising at least one plant-based protein and at least one starch,

   wherein the protein content of the composition is at least 25 wt% based on the total dry weight of the composition;
   wherein the at least one starch is present at 3-40 wt% based on the total dry weight of the composition if the at least one starch is a native starch with an amylose content between 10 and 40%;
   wherein the at least one starch is present at 3-30 wt% based on the total dry weight of the composition if the at least one starch is a native starch with an amylose content between 40 and 80%; and
   wherein the at least one starch is present at 3-70 wt% based on the total dry weight of the composition if the at least one starch is a functionalized starch with an amylose content between 10 and 80%.

2. The composition according to claim 1, wherein the at least one starch is from a different botanical source than the at least one plant-based protein.

3. The composition according to claim 1 or claim 2, wherein the at least one starch is capable of gelatinizing within 15 minutes with the application of shear and moisture at a temperature of at least 80°C, preferably at least 100 °C, more preferably at least 120 °C.

4. The composition according to any one of claims 1-3, wherein the at least one starch is a functionalized starch which is heat-treated, preferably pre-gelatinised.

5. The composition according to any one of claims 1-4, wherein the at least one starch is a maize starch, pea starch, or combination thereof.

6. The composition according to one of claims 1-5, wherein the at least one plant-based protein is obtained from a seed, a grain, a pulse, or a combination thereof.

7. The composition according to any one of claims 1-6, wherein the at least one plant-based protein is a wheat protein, pulse protein, or combination thereof, wherein the pulse protein preferably is selected from the group consisting of faba bean, soybean, pea, or combination thereof.

8. The composition according to any one of claims 1-7, wherein the composition is a powder, a slurry or a dough.

9. The composition according to any one of claims 1-8, further comprising 0.5 - 4 wt %, preferably about 1 wt %, based on total weight of the composition of a salt, preferably selected from sodium chloride (NaCl) and/or potassium chloride (KCl).

10. The composition according to any one of claims 1-9, further comprising 55-75 wt% of water, based on total weight of the composition.

11. A process, comprising the steps of

> providing a composition according to any one of claims 1-10;
> texturizing by shear force the composition at a temperature between 80 °C and 160 °C, preferably between 120 °C and 140 °C.

12. The process according to claim 11, wherein the texturizing is performed by extrusion, including high moisture extrusion, or shear cell technology.

13. The process according to claim 11 or claim 12, whereby the composition is the composition of claim 4.

14. A fibrous structure that is generated by the process of any one of claims 11-13, having anisotropy in parallel and perpendicular direction.

15. The fibrous structure according to claim 14, having an anisotropy ratio of greater than 1.5.

16. An edible product comprising the fibrous structure of claim 14 or claim 15.

17. The edible product of claim 16, which is a food or feed product, or an ingredient for a food or feed product.

18. The edible product of claim 16 or claim 17, which is a meat analogue.

19. Use of a fibrous structure according to any one of claim 14 or claim 15 in the manufacture of an edible product such as a meat analogue.

20. Use of a starch as described by any one of claims 1-5 in a fibrous structure as described in claim 14 or claim 15 or in an edible product as described in claims 16-18.

21. The use according to claim 20, wherein the starch replaces at least a portion of the gluten comprised in a fibrous structure or edible product.

Figure 1:

Figure 2:

Figure 3:

Figure 4:

A

B

C

D

E

F

G

Figure 5:

Figure 6.

**EUROPEAN SEARCH REPORT**

Application Number

EP 21 21 4165

## DOCUMENTS CONSIDERED TO BE RELEVANT

| Category | Citation of document with indication, where appropriate, of relevant passages | Relevant to claim |
|---|---|---|
| X | WO 2021/008680 A1 (GOLD&GREEN FOODS OY [FI]) 21 January 2021 (2021-01-21) * table VII * | 1-20 |
| X | US 2008/102165 A1 (NING LUPING L [US] ET AL) 1 May 2008 (2008-05-01) * paragraphs [0025], [0033], [0036], [0043], [0053], [0067], [0082]; claims 3,7,8 * | 1-17,19, 20 |
| X | WO 2020/240095 A1 (FAZER AB OY KARL [FI]) 3 December 2020 (2020-12-03) <br><br> * claims 6,14; figure 1 * | 1-3, 5-12, 14-20 |
| X | ZHANG WEI ET AL: "Relationships between the gelatinization of starches and the textural properties of extruded texturized soybean protein-starch systems", JOURNAL OF FOOD ENGINEERING, ELSEVIER, AMSTERDAM, NL, vol. 174, 19 November 2015 (2015-11-19), pages 29-36, XP029368424, ISSN: 0260-8774, DOI: 10.1016/J.JFOODENG.2015.11.011 * paragraph [02.1] * | 1-3,5-8, 11,12, 14-20 |
| X | WO 2020/037368 A1 (V2 FOOD PTY LTD [AU]) 27 February 2020 (2020-02-27) <br><br> * paragraphs [0013], [0014] * | 1,2,5-7, 9,11,12, 16-20 |
| X | US 2020/060310 A1 (SCHMIDT LISA [US] ET AL) 27 February 2020 (2020-02-27) <br><br> * paragraph [0046] * | 1,2,5-9, 11,12, 14-20 |

-/--

CLASSIFICATION OF THE APPLICATION (IPC)

INV.
A23J3/26
A23L11/00
A23J3/22

TECHNICAL FIELDS SEARCHED (IPC)

A23J
A23L

The present search report has been drawn up for all claims

| Place of search | Date of completion of the search | Examiner |
|---|---|---|
| The Hague | 12 May 2022 | Smalt, Rolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EP 4 193 844 A1**

## EUROPEAN SEARCH REPORT

Application Number

EP 21 21 4165

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2017/174518 A1 (NESTEC SA [CH]) 12 October 2017 (2017-10-12) ----- | 1 | |
| A | CAMIRE M E ET AL: "Chemical and nutritional changes in foods during extrusion", CRITICAL REVIEWS IN FOOD SCIENCE AND NUTRITION, TAYLOR & FRANCIS, USA, vol. 29, no. 1, 1 January 1990 (1990-01-01), pages 35-57, XP009170620, ISSN: 1040-8398, DOI: 10.1080/10408399009527513 ----- | 1 | |
| A | BÜHLER JAN M. ET AL: "Starch in Plant-Based Meat Replacers: A New Approach to Using Endogenous Starch from Cereals and Legumes", STARCH/STARKE, vol. 74, no. 1-2, 25 September 2021 (2021-09-25), page 2100157, XP55920314, DE ISSN: 0038-9056, DOI: 10.1002/star.202100157 Retrieved from the Internet: URL:https://onlinelibrary.wiley.com/doi/full-xml/10.1002/star.202100157> ----- | 1 | TECHNICAL FIELDS SEARCHED (IPC) |

The present search report has been drawn up for all claims

| Place of search | Date of completion of the search | Examiner |
|---|---|---|
| The Hague | 12 May 2022 | Smalt, Rolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# EP 4 193 844 A1

## ANNEX TO THE EUROPEAN SEARCH REPORT
## ON EUROPEAN PATENT APPLICATION NO.

EP 21 21 4165

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2022

| Patent document cited in search report | | Publication date | Patent family member(s) | | Publication date |
|---|---|---|---|---|---|
| WO 2021008680 | A1 | 21-01-2021 | CN | 114390892 A | 22-04-2022 |
| | | | EP | 3996518 A1 | 18-05-2022 |
| | | | WO | 2021008680 A1 | 21-01-2021 |
| US 2008102165 | A1 | 01-05-2008 | NONE | | |
| WO 2020240095 | A1 | 03-12-2020 | AU | 2020282111 A1 | 18-11-2021 |
| | | | CA | 3136202 A1 | 03-12-2020 |
| | | | CN | 113939196 A | 14-01-2022 |
| | | | EP | 3975743 A1 | 06-04-2022 |
| | | | FI | 20195456 A1 | 01-12-2020 |
| | | | WO | 2020240095 A1 | 03-12-2020 |
| WO 2020037368 | A1 | 27-02-2020 | AU | 2019326259 A1 | 11-03-2021 |
| | | | CN | 112822949 A | 18-05-2021 |
| | | | EP | 3840593 A1 | 30-06-2021 |
| | | | JP | 2021534819 A | 16-12-2021 |
| | | | KR | 20210052458 A | 10-05-2021 |
| | | | SG | 11202101373X A | 30-03-2021 |
| | | | US | 2021329942 A1 | 28-10-2021 |
| | | | WO | 2020037368 A1 | 27-02-2020 |
| US 2020060310 | A1 | 27-02-2020 | US | 2020060310 A1 | 27-02-2020 |
| | | | US | 2022030911 A1 | 03-02-2022 |
| WO 2017174518 | A1 | 12-10-2017 | CA | 3017040 A1 | 12-10-2017 |
| | | | CN | 108882726 A | 23-11-2018 |
| | | | EP | 3439486 A1 | 13-02-2019 |
| | | | IL | 260664 A | 01-04-2022 |
| | | | US | 2019150476 A1 | 23-05-2019 |
| | | | WO | 2017174518 A1 | 12-10-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6221420 B
- US 10316107 B2
- US 2682466 A
- NL 1019816 C

### Non-patent literature cited in the description

- MARKOVINA et al. *Food Qual Prefer,* 2015, vol. 45, 26-32
- HOEK et al. *Appetite,* 2011, vol. 56, 662-673
- CHEFTEL et al. *Food Res Int,* 1992, vol. 8, 235-275
- GRABOWSKA et al. *Food Res Int,* 2014, vol. 64, 743-751
- SCHREUDERS et al. *J Food Eng,* 2019, vol. 261, 32-39
- HOOVER. *Critical Reviews Food Science Nutrition,* 2010, vol. 50, 835-847
- SIM et al. *Foods,* 2021, vol. 10, 1967
- KUMAR et al. *Food Hydrocoll,* 2021, vol. 115, 106595
- SINGH et al. *Food Hydrocoll,* 2007, vol. 21, 1-22
- AGUILERA ; STANLEY. *Food Rev Int,* 1993, vol. 9, 527-550
- CHEFTEL et al. *Food Rev Int,* 1992, vol. 8, 235-275
- THIEBAUD et al. *Food Science Technol,* 1996, vol. 29, 526-535
- LIU et al. *Food Sci Techn Int,* 2005, vol. 11, 463-470
- GALLANT et al. *Food Microstructure,* 1984, vol. 3, 175-183
- DOWNEY ; BURGESS. *J Food Techn,* 1979, vol. 14, 21-31
- DOWNEY ; BURGESS. *J Food Techn,* 1979, vol. 14, 33-40
- ANTONOV et al. *Die Nahrung,* 1985, vol. 29, 39
- SUCHKOV et al. *Nahrung-Food,* 1980, vol. 24, 893-897
- SUCHKOV et al. *Nahrung-Food,* 1988, vol. 32, 669-678
- SUCHKOV et al. *Nahrung-Food,* 1988, vol. 32, 679-689
- CORNET et al. *Food Hydrocoll,* 2021, vol. 120, 106788
- DEKKERS et al. *Food Res Int,* 2018, vol. 107, 281-288
- GRABOWSKA et al. *J Food Engin,* 2016, vol. 188, 77-86
- SCHREUDERS et al. *J Food Engin,* 2019, vol. 261, 32-39
- SCHREUDERS et al. *Journal of Food Engineering,* 2019, vol. 261